# EUROPEAN PATENT SPECIFICATION

(11) **EP 3 348 385 B1**
(45) Date of publication and mention of the grant of the patent: **07.08.2024**
(21) Application number: 17275005.1
(22) Date of filing: 13.01.2017
(51) Int. Cl.: B29C 64/153, B29C 64/273, B29C 64/393, B33Y 50/02, B22F 10/00, B33Y 10/00, B33Y 30/00

(54) **METHOD AND APPARATUS FOR MANUFACTURING A THREE-DIMENSIONAL OBJECT BY ADDITIVE LAYER MANUFACTURING**
VERFAHREN UND VORRICHTUNG ZUR HERSTELLUNG EINES DREIDIMENSIONALEN OBJEKTS DURCH GENERATIVE SCHICHTFERTIGUNG
PROCÉDÉ ET APPAREIL DE FABRICATION D'UN OBJET TRIDIMENSIONNEL PAR FABRICATION ADDITIVE

(43) Date of publication of application: 18.07.2018
(73) Proprietor: Airbus Operations GmbH, 21129 Hamburg (DE)
(72) Inventor: MEDEIROS ARAUJO, Thiago, Bristol, BS34 8UR (GB)
(74) Representative: Bird & Bird LLP - Hamburg

(56) References cited:
- US-A- 5 648 450
- US-A1- 2009 017 220
- US-A1- 2011 316 178

## Description

The present invention relates to a method of manufacturing a three-dimensional object by additive layer manufacturing (ALM), in particular selective laser melting (SLM), and to a corresponding apparatus for manufacturing a three-dimensional object by additive layer manufacturing.

Additive layer manufacturing is increasingly used for rapidly manufacturing prototype or even final components and is then also referred to as rapid prototyping and rapid manufacturing, respectively. In contrast to conventional manufacturing methods involving removal of material from a block of material by, e.g., cutting, drilling or other machining processes, additive layer manufacturing directly constructs a desired three-dimensional object layer by layer from a digital representation of the object. It is also known as 3D printing.

A typical additive layer manufacturing method comprises providing a thin layer of material from which the product is to be manufactured in powder form on a support plate, melting, curing or sintering the powder in those portions of the layer corresponding to the product being manufactured by means of laser irradiation, subsequently providing a further thin layer of the material on top of the initial layer and again melting, curing or sintering the powder of the layer in those portions of the layer corresponding to the product being manufactured by means of laser irradiation, and repeating the process until the complete object is obtained. In each layer the powder not corresponding to the product is not irradiated and remains in powder form, so that it can be removed from the object at a later stage. The support plate may be provided by a movable table that - after each irradiation of a layer - is lowered a distance equal to the thickness of that layer to provide for a defined starting condition for the provision of each layer.

In this regard, it is to be noted that it is in principle possible that the individual layers are not entire or continuous layers of material, but comprise material only in the areas corresponding to the object being manufactured or in selected regions comprising those areas.

Known additive layer manufacturing methods as described above are typically carried out in chambers in which a tightly controlled constant inert gas atmosphere, e.g. argon, is maintained in order to avoid as far as possible reactions between the layers and surrounding gases upon laser irradiation.

Particular additive layer manufacturing methods of this type are also referred to as selective laser melting (SLM). In this regard, it is noted that instead of using a laser beam it is also possible to use an electron beam or another particle beam for the same purposes. A particular additive layer manufacturing method utilizing an electron beam is also referred to as electron beam melting (EBM).

As noted above, the object is built up layer by layer in a three-dimensional manner. This makes it possible to efficiently and rapidly manufacture different highly complex objects from various materials, such as metal materials, plastic or polymer materials and ceramic materials, using one and the same apparatus. For example, highly complex grid or honeycomb structures which are difficult to produce using other techniques can be easily manufactured. As compared to traditional methods, the complexity of the object has only little influence on the manufacturing costs.

When using additive layer manufacturing methods relying on a laser beam or particle beam together with a powder material having a relatively high melting temperature the layers are typically maintained at a temperature close to the melting temperature of the material such that the laser beam or particle beam only needs to introduce a relatively small amount of energy into the material in order to increase the irradiated portions to the melting temperature and thereby melt the material. Amongst others in the case of polymer materials, and in particular high temperature polymer materials, it must be taken into consideration that when maintaining the material at high temperatures close to the melting temperature for substantial periods of time, semi-sintering of the powder material may occur and the thermal history of the material may be negatively affected, resulting in a change of the intrinsic material properties. This may not only affect the properties of the irradiated regions, but also the powder material outside the portions of the layer corresponding to the product being manufactured. Consequently, the latter powder material, which could in principle be reused for the manufacturing of another three-dimensional object, may have to be discarded, resulting in waste of material and an increase in costs. For this reason it was suggested in WO 2012/160344 A1 to maintain the article during its production at a temperature above the glass transition temperature but significantly below the re-solidification temperature of the polymer. However, while this approach allows for a re-use of unirradiated powder material, it has been found that it is desirable to further optimize the material properties of the manufactured three-dimensional object,

Document US 2011/0316178 A1 discloses, according to its abstract, a method for making metallic and/or non-metallic products, in particular dental products, by freeform sintering and/or melting, in which the products are fabricated layer by layer from a material that is applied layer by layer by means of a computer-controlled high-energy beam, in particular a laser or electron beam. In order to reduce production times, beam irradiates predetermined positions of a layer of a material a plurality m of times. Each of said positions is initially heated during the first irradiation to a temperature below the melting point Tmelt of the material, and during the mth irradiation to a temperature above said melting point and is completely melted over the entire thickness of the layer in such a way that the material fuses at said position to the layer thereunder.

It is therefore an object of the present invention to provide a method and an apparatus system for manufacturing a three-dimensional object made of polymer material by additive layer manufacturing in a simple, rapid and cost efficient manner while at the same time guaranteeing good material properties.

This object is achieved by a method having the features of claims 1 and by an apparatus having the features of claim 13. Advantageous embodiments of the method and the apparatus are the subject-matter of the respective dependent claims.

According to the present invention a method of manufacturing a three-dimensional object by additive layer manufacturing, comprising - in accordance with the prior art methods described above - successively providing a plurality of layers of material in powder form, one on top of the other, on a support means and irradiating each layer with at least one laser or particle beam prior to providing the subsequent layer. Any such laser beam is generated by means of a laser, and any such particle beam is generated by means of a suitable particle beam generation device. In the following a laser or a particle beam generation device is referred to as irradiation device. The material in powder form is or comprises polymer material which has a glass transition temperature and is preferably thermoplastic, in particular a high-temperature polymer. Such high temperature polymers may have a melting temperature exceeding 250 °C. The laser or particle beam is chosen such that the material at least partially absorbs the energy provided by the laser or particle beam. The support means is preferably arranged inside a chamber, which is also referred to as build chamber. Although using a laser beam is preferred, so that the irradiation device or irradiation devices is or are preferably a laser or lasers, in some applications the use of a particle beam may also be advantageous. For example, provided that low pressures can be present inside the chamber, the irradiation may be effected by means of an electron beam.

Typically the layers have thicknesses in the range of 20 to 100 µm, wherein the thicknesses are selected based on the desired surface finish quality and processing speed. Each layer is irradiated selectively only in those portions of the layer corresponding to the three-dimensional object being manufactured, and the irradiation is carried out in such a manner that the material of the respective layer is melted locally in the irradiated portions. This local melting serves to fuse the powder particles in the irradiated zones together and to the preceding layer.

The temperature of the layers is controlled such that prior to irradiation of each layer the temperature of the respective layer is in a range from the glass transition temperature of the polymer material to 30% above the glass transition temperature or, preferably, in a range from the glass transition temperature to 60 °C above the glass transition temperature. The temperature is referred to as starting temperature. Preferably, the temperature of the current layer and of the previously deposited layers are maintained in this temperature range throughout the entire manufacturing process, with the exception of the portions being irradiated during irradiation and subsequent cooling thereof. The control of the temperature may preferably comprise controlling a temperature of the support means and/or - in the case of use of a build chamber - controlling a temperature inside the build chamber.

For each layer the irradiation is carried out in such a manner that each location or point of those portions of the layer corresponding to the three-dimensional object being manufactured is irradiated multiple times during or in multiple temporally spaced separate time intervals associated with the respective location. In each time interval the location is irradiated preferably only once. The time intervals are different for different locations, i.e. the time intervals are location-specific. In other words, for each location there are multiple time intervals during which energy is applied to the location by the laser beam or particle beam. The entirety of the locations constitutes the portions of the layer corresponding to the three-dimensional object being manufactured.

The operating parameters of the at least one irradiation device, and thus parameters determining the laser irradiation or particle beam irradiation, are chosen such that in each of the locations the polymer material reaches the melting temperature only during or after the second or a subsequent one of the time intervals associated with the respective location, i.e. during or after the second or a further irradiation, and that in each of the locations the laser energy or particle beam energy introduced during each of the associated time intervals is insufficient to heat the polymer material from the starting temperature to the melting temperature of the polymer material. Thus, in other words, the laser energy or particle beam energy applied during at least the first time interval or irradiation is not sufficient to heat the polymer material to the melting temperature, and in none of the time intervals the applied laser energy or particle beam energy is sufficient to heat the polymer material from the starting temperature to the melting temperature. Rather, the melting temperature is only reached during or after the last time interval, during or after the penultimate time interval or during or after an earlier time interval. Preferably, for each of the locations and each of the associated time intervals the applied laser energy or particle beam energy is at most 60%, preferably at most 50% and more preferably at most 40% of the energy necessary to heat the polymer material from the starting temperature to the melting temperature.

It has been found that by applying the laser energy or particle beam energy to each location in multiple spaced time intervals and in portions insufficient to heat the polymer material from the starting temperature in the specified range to the melting temperature, the material properties and mechanical characteristics of the finished three-dimensional object, such as, e.g., strength and/or ductility, can be increased significantly while maintaining the advantage of being able to re-use the powder material from the portions of the layers not corresponding to the three-dimensional object. It has been recognized in the context of the present invention that applying larger amounts of laser energy or particle beam energy may destroy the chemical bonds between the chains of the polymer materials and that this may result in a degradation of the material. The necessary changes in the irradiation can be provided for in a very simple manner while adding only little costs to the method and apparatus. Aside from the adaptation and control of the operating parameters of the irradiation device no additional work steps are required.

In a preferred embodiment each of the locations is irradiated at least three times, and the operating parameters of the at least one irradiation device are chosen such that in each of the locations the polymer material reaches the melting temperature during or after the penultimate or an earlier one of the time intervals associated with the respective location and is already molten before the beginning of the later one or ones of the time intervals associated with the respective location. For example, at each one of the locations the polymer material is already molten when beginning the last irradiation of that location or the melting temperature is already reached prior to the penultimate irradiation. Irradiating a location at which the polymer material is already molten may provide the advantage that the laser light or particles passes or pass through the molten material and is or are thereby able to reach the layer beneath the layer currently being irradiated, so that the bonding between the two layers is increased and a high material strength in the direction perpendicular to the extension of the layers can be achieved.

In a preferred embodiment, for each of the layers the irradiation is carried out by scanning the at least one laser beam or particle beam over those portions of the layer corresponding to the three-dimensional object being manufactured in such a manner that for each of the locations and during each of the associated time intervals a laser beam or particle beam of the at least one laser beam or particle beam moves over the respective location in a defined movement direction. Further, for each of the locations at least two different movement directions are used for different ones of the associated time intervals. This provides for fast irradiation and homogenous material properties of the finished three-dimensional object by avoiding inhomogeneous application of laser energy or particle beam energy. It is further preferred if for each of the locations different movement directions are used for each two successive ones of the time intervals associated with the respective location. Alternatively or additionally it is also preferred if for each of the locations the at least two different movement directions comprise a first movement direction and a second movement direction oriented at an angle of larger than 0° to 90° and, e.g., 90° with respect to the first movement direction. In case only two different movement directions are used and are the first and second movement directions, the first and second movement directions alternate.

In these embodiments in which the irradiation is carried out by scanning, it is further preferred if for each of the layers the scanning of the at least one laser beam or particle beam comprises a plurality of separate scanning operations, during each of which a laser beam or particle beam of the at least one laser beam or particle beam is moved in a respective defined movement pattern over all of the locations or a contiguous subset of the locations, such that for each of the locations the irradiations during the respective time intervals are carried out during different ones of the scanning operations. For each of the locations the respective scanning operations comprise scanning operations having at least two different movement patterns. Different ones of the movement patterns differ from each other in the direction in which the respective laser beam or particle beam moves over the respective location. In particular, for each location two alternating movement patterns may be used for the multiple irradiations. It is preferred if for each of the locations the respective scanning operations comprise a first scanning operation having a first movement pattern and a second scanning operation having a second movement pattern which is a rotated version of the first movement pattern, e.g. by an angle from larger than 0° to 90°, for example by 90°. In case only two different movement patterns are used and are the first and second movement patterns, the first and second movement patterns alternate.

The at least one irradiation device is or comprises preferably a laser, which may further preferably be selected from the group consisting of CO₂ lasers, diode lasers or fiber optic lasers.

In a preferred embodiment two or more irradiation devices are utilized for the irradiation of each of the layers. For example, different ones of the two or more irradiation devices may be utilized for different subsets of the locations and/or for different ones of the irradiations, such as for different ones of the above-mentioned scanning operations. The use of multiple irradiation devices decreases the processing time, thereby reducing the manufacturing time.

In a preferred embodiment, for each of the layers and for each of the locations different operating parameters of the at least one irradiation device are used during different ones of the time intervals associated with the respective location.

Generally, the operating parameters of the at least one irradiation device may preferably comprise laser power or particle beam power, intensity distribution profile, spacing between adjacent paths of a movement pattern of the respective laser beam or particle beam, speed of movement of the laser beam or particle beam and/or pulse duration of a pulsed laser beam or particle beam.

In a preferred embodiment the polymer material is or comprises material selected from the group consisting of PA6, PA11, PA12, PARA, PPS, PBT and PAEK, including PEEK, PEK and PEKK. Alternatively or additionally the material in powder form may advantageously comprise the polymer material, such as, in particular, the above-mentioned particular polymer materials, as matrix into which glass - in particular in the form of fibers, beads and/or flakes -, carbon black, carbon fiber, graphene and/or aluminum - in particular in the form of fibers, beads and/or flakes - is embedded.

In a preferred embodiment the polymer material has a crystallization half time of at least three minutes, independent of the temperature of the polymer material. While it is also possible to process a polymer which presents a lower crystallization half time, it has been found that without providing strong additional support structures large degrees of material shrinkage and warping may occur due to internal stresses generated by a quick onset of crystallization upon cooling down following irradiation. By contrast, utilizing a material with the above minimum crystallization half time serves to prevent or at least minimize the necessity of additional support structures. This also decreases the failure rate of the manufacturing process.

The above-described method can be advantageously carried out using an apparatus which comprises a housing defining a chamber, a support means disposed inside the chamber, a powder delivery means adapted for providing the plurality of layers of material in powder form one on top of the other on the support means, a temperature control means adapted for selectively controlling the temperature of each of the layers prior to irradiation thereof, at least one irradiation device, preferably at least one laser, adapted for irradiating each of the layers provided by the powder delivery means on the support means with a respective laser beam or particle beam, a beam movement means adapted for selectively irradiating only portions of each of the layers provided by the powder delivery means on the support means, a storage means for storing a digital representation of a three-dimensional object in the form of a plurality of layers, and a control unit operatively coupled to the powder delivery means, the temperature control means, the irradiation device, the beam movement means and the storage means and adapted for operating the powder delivery means, the temperature control means, the irradiation device and the beam movement means to manufacture a three-dimensional object in accordance with a digital representation of the object stored in the storage means and using the method according to any of the above-described embodiments.

In a preferred embodiment the powder delivery means comprises a rotatable roller and a roller drive arrangement. The roller drive arrangement is operable to simultaneously rotate the roller in a rotation direction and move it over the support means in a movement direction to distribute homogenously and in a defined thickness a layer of the material in powder form on the support means or a preceding layer. The rotating direction and the movement direction are such that a portion of the surface of the roller facing the layer moves into a direction opposite the movement direction. It has been found that when using such roller arrangement instead of a scraper, better spreading of the material across the support means may be achieved. Moreover, in case of any warping by the heated material, the contra-rotating roller is much more forgiving than a static scraper.

In the following an embodiment of the invention is explained in more detail with reference to the drawings.
- Figure 1: is a schematic representation of an apparatus according to the invention for manufacturing a three-dimensional object by selective layer melting.
- Figure 2: is a schematic representation of a sequence of movement patterns of scanning operations used for irradiating multiple times portions of a layer of the three-dimensional object to be manufactured.
- Figure 3: is a flow chart of an embodiment of a method according to the invention for manufacturing a three-dimensional object by additive layer manufacturing.

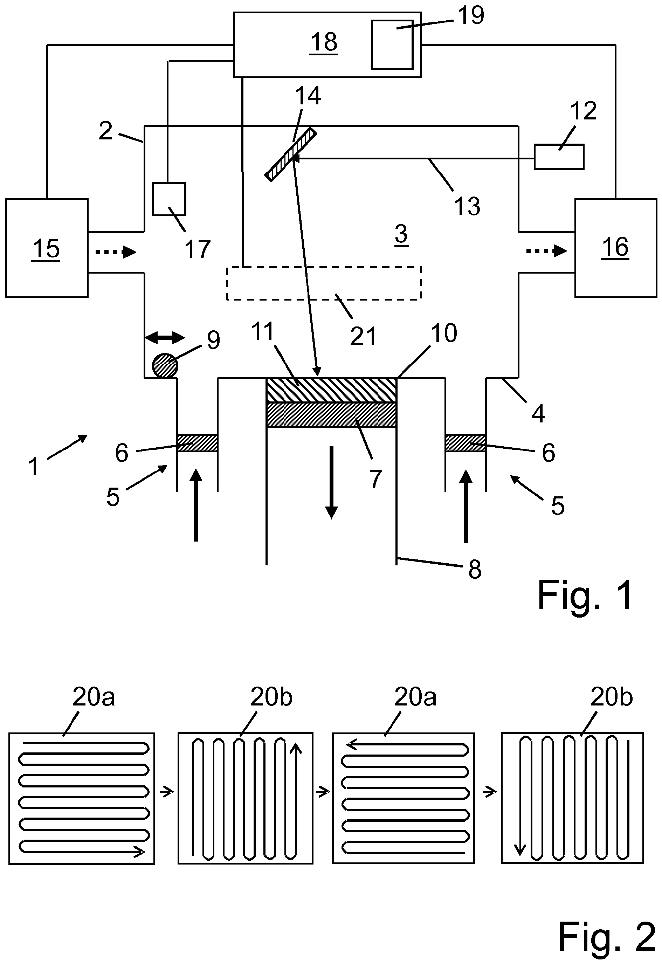

The apparatus 1 for selective laser melting (SLM) shown in Figure 1 comprises a housing 2 defining an interior chamber 3. In the bottom wall 4 of the housing 2 two integrated powder containers 5 are provided, each having a bottom provided by a movable powder feed piston 6. Further, a portion of the bottom wall 4 of the housing 2 is defined by a movable support means or build platform 7. More particularly, the build platform 7 is movable upwardly and downwardly inside a channel-shaped extension 8 of the housing 2 and sealingly engages the channel walls thereof.

In operation powder, which is or comprises a polymer material and which is stored in the powder containers 5 is fed into the chamber 3 by moving upwardly one or both of the powder feed pistons 6 and is distributed as a thin layer on the top surface of the build platform 7 or of a partial object 11 disposed thereon by operating a powder spreading roller 9 which is movable in the horizontal direction. In this regard, prior to operating the powder spreading roller 9 the build platform 7 is moved downwardly inside the channel 8 such that the vertical distance between the upper end 10 or the bottom wall 4 of the housing 2 and the top surface of the build platform 7 or a partial object 11 disposed thereon is identical to the thickness of the powder layer to be distributed. The powder spreading roller 9 is operated in such a manner that during each horizontal movement of the roller 9 the direction of rotation of the roller 9 is such that the horizontal tangential direction of movement of the portion of the roller facing the partial object 11 is opposite the direction of the horizontal movement of the entire roller 9.

After each powder layer has been distributed a laser 12 is operated to irradiate the layer with a laser beam 13. The laser beam 13 is moved over the layer by means of one or more movable mirrors 14, which may take the form of mirror galvanometers and may be controlled in analog or digital form. The laser 12 and the mirror or mirrors 14 are operated in such a manner that only selective portions of the layer are irradiated. In those portions the powder melts and forms a part of a three-dimensional object corresponding to the respective layer.

Following the irradiation the above steps are repeated, i.e. the build platform 7 is moved downwardly by a distance corresponding to the thickness of the subsequent layer, and the subsequent layer is provided on top of the previous layer by means of the powder feed pistons and the powder spreading roller 9 and is irradiated by means of the laser 12 and the mirror or mirrors 14.

The above process is carried out automatically under the control of a control unit 18. For this purpose, the control unit 18 is operatively coupled to the powder feed pistons 6, the build platform 7, the powder spreading roller 9, the laser 12 and the mirror or mirrors 14 (for reasons of clarity of the Figure these couplings are not shown in the Figure) such that it can move and operate these elements as described above. The control is effected on the basis of digital data stored in a memory 19 of the control unit 18. For manufacturing a particular three-dimensional object, digital data are stored in the memory 19 describing layer for layer the structure of the object.

During irradiation of each of the layers a defined gas atmosphere is maintained inside the chamber 3, such as, e.g., a gas atmosphere having an oxygen content of less than 5%. For this purpose, the apparatus 1 comprises a gas supply system 15 and a gas venting system 16. The gas supply system 15 comprises suitable tanks or containers for one or more gases and one or more valves and pumps for selectively introducing gas from one or more of the tanks or containers into the chamber 3. The gas venting system 16 comprises one or more valves and pumps for removing gas from the chamber 3. Further, a detector 17 is disposed inside the chamber 3, which detector 17 is operable to detect particular characteristics of the gas atmosphere present inside the chamber 3 and to provide corresponding detection signals.

As shown in Figure 1, the gas supply system 15, the gas venting system 16 and the detector 17 are operatively coupled to the control unit 18 such that in operation the control unit 18 can send control signals to the gas supply system 15 and the gas venting system 16 and can receive status signals from the gas supply system 15 and the gas venting system 16 and the detection signals provided by the detector 17. This allows for an automatic control of the gas atmosphere by the control unit 18.

The apparatus 1 also includes a heating device 21 disposed inside the chamber 3 and adapted for heating the partial object 11 and the current layer to a defined temperature which is in a range from the glass transition temperature of the polymer material to 30% above the glass transition temperature. For example, the heating device 21 may comprise one or more infrared heaters. The heating device 21 is operable to maintain, prior to, during and after irradiation of each of the layers, a defined temperature of the layers, with the exception of the regions currently being heated by laser irradiation. As shown in Figure 1, the heating device 21 is likewise coupled to the control unit 18, such that in operation the control unit 18 can send control signals to the heating device 21. Preferably, there is also a heating device (not shown) which is adapted to heat the powder contained in the powder containers 5. The powder in the powder containers 5 is then preferably heated or pre-heated to a temperature which is much lower than the temperature to which the layers are heated by the heating device 21, e.g. to a temperature which is between 10 and 60 °C below the temperature to which the layers are heated by the heating device 21.

For manufacturing a particular three-dimensional object, the digital data mentioned above comprise for each layer a sequence of movement patterns 20a, 20b, which is illustrated for the particular example of a cuboidal three-dimensional object in Figure 2 and which describes a sequence of separate scanning operations. During each scanning operation the laser beam 13 is moved over the surface of the current layer in accordance with the respective movement pattern 20a, 20b. Further, for each layer the digital data comprise values for operating parameters influencing the amount of laser energy which is applied to each location of the layer during each of the scanning operations. Examples of operating parameters are the movement speed and the laser power. It should be noted that the amount of laser energy may alternatively or additionally also be determined by the distance between adjacent movement paths of the respective movement pattern 20a, 20b. The values for the operating parameters are chosen such that the amount of energy applied during each scanning operation is not sufficient to heat the polymer material from the defined starting temperature to the melting temperature of the polymer material, but that the melting temperature is reached after the second, third or fourth scanning operation.

The movement patterns 20a, 20b and the sequence in which they are arranged are chosen such that during each two successive scanning operations the direction of movement of the laser beam over each location of the layer being irradiated differs by 90°. For this purpose, in the example of Figure 2 the two movement patterns 20a, 20b are arranged alternatingly in the sequence, and the movement pattern 20b corresponds to the movement pattern 20a rotated by 90°.

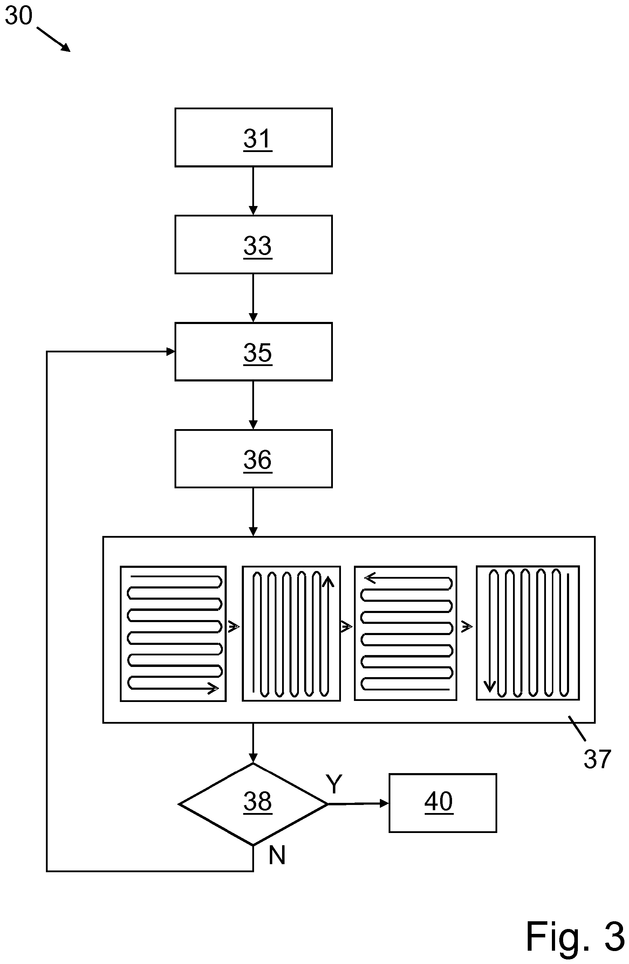

Figure 3 shows an embodiment of a method 30 of manufacturing a defined three-dimensional object using the apparatus 1.

In step 31 digital data are stored in the memory 19 describing layer for layer the structure of the object. These data are adapted for providing information to the control unit 18 allowing it to control the powder feed pistons 6, the build platform 7, the powder spreading roller 9, the laser 12 and the mirror or mirrors 14 such that they are operated such that the final object has the desired structure. The digital data comprise, for each layer, the sequence of the plurality of different movement patterns 20a, 20b and of the values of operating parameters.

Moreover, in step 33 digital data are stored in the memory 19 defining the pressure and composition of the gas atmosphere to be used as well as the temperature of the object being manufactured and the layers prior to irradiation thereof. The temperature is in a range from the glass transition temperature of the polymer material to 30% above the glass transition temperature.

The storing of the various digital data in the memory 19 may e.g. be carried out by inserting a removable data carrier storing the data into a corresponding reading device provided in the control unit 18, wherein the control unit 18 is operable for transferring the data from the removable data carrier to the memory 19. In addition or alternatively, the control unit 18 may be connected or connectable to a wired or wireless data transmission network over which the digital data to be stored in the memory 19 can be received by the control unit 18.

Next, based on the digital data the gas atmosphere in the chamber 3 and the temperature of the build platform 7 and the object being manufactured are controlled in accordance with the digital data. Once this has been done, the build platform 7 is positioned in the above-described manner to receive the current layer of powder material (step 35) and the powder feed pistons 6 and the powder spreading roller 9 are operated to provide the layer of powder material on the build platform 7, which layer is likewise controlled to have the temperature provided for by the digital data (step 36). The laser 12 and the mirror or mirrors 14 are then operated to irradiate the layer in accordance with the corresponding structural digital data and the sequence of scanning operations associated with the respective layer (step 37).

Following the irradiation of each of the layers it is determined whether the current layer is the last layer (step 38) and the process is ended if that is the case. Otherwise, the method reverts to step 35 for positioning the build platform 7 for receipt of the subsequent layer (step 38).

The above steps are repeated until the last layer has been irradiated and the object is completed (step 40).

## Claims

1. A method of manufacturing a three-dimensional object by additive layer manufacturing, comprising the following steps:
successively providing a plurality of layers of material in powder form, one on top of the other, on a support means, wherein the material in powder form is or comprises polymer material, and
irradiating each layer, prior to providing the subsequent layer, with at least one laser beam or particle beam using at least one irradiation device, wherein each layer is irradiated selectively only in those portions of the layer corresponding to the three-dimensional object being manufactured and wherein the irradiation is carried out in such a manner that the material is melted locally in the corresponding portions,
wherein the temperature of the layers is controlled such that prior to irradiation of each layer the respective layer has a starting temperature which is in a range from the glass transition temperature of the polymer material to 30% above the glass transition temperature, and
wherein for each layer the irradiation is carried out in such a manner that each location of those portions of the layer corresponding to the three-dimensional object being manufactured is irradiated multiple times during multiple spaced time intervals associated with the respective location, wherein operating parameters of the at least one irradiation device are chosen such that in each of the locations the polymer material reaches the melting temperature only during or after the second or a subsequent one of the time intervals associated with the respective location and that in each of the locations the energy introduced during each of the associated time intervals by the at least one laser beam or particle beam is insufficient to heat the polymer material from the starting temperature to the melting temperature of the polymer material.

2. The method according to claim 1, wherein each of the locations is irradiated at least three times, and wherein the operating parameters of the at least one irradiation device are chosen such that in each of the locations the polymer material reaches the melting temperature during or after the penultimate or an earlier one of the time intervals associated with the respective location and is already molten before the beginning of the later one or ones of the time intervals associated with the respective location.

3. The method according to claim 1, wherein for each of the layers the irradiation is carried out by scanning the at least one laser beam or particle beam over those portions of the layer corresponding to the three-dimensional object being manufactured in such a manner that for each of the locations and during each of the associated time intervals a laser beam or particle beam of the at least one laser beam or particle beam moves over the respective location in a defined movement direction, wherein for each of the locations at least two different movement directions are used for different ones of the associated time intervals.

4. The method according to claim 3, wherein for each of the locations different movement directions are used for each two successive ones of the time intervals associated with the respective location.

5. The method according to claim 3, wherein for each of the locations the at least two different movement directions comprise a first movement direction and a second movement direction oriented at an angle of from larger than 0° to 90° with respect to the first movement direction.

6. The method according to claim 3, wherein for each of the layers the scanning of the at least one laser beam or particle beam comprises a plurality of separate scanning operations, during each of which a laser beam or particle beam of the at least one laser beam or particle beam is moved in a respective defined movement pattern over all of the locations or a contiguous subset of the locations, such that for each of the locations the irradiations during the respective time intervals are carried out during different ones of the scanning operations, wherein for each of the locations the respective scanning operations comprise scanning operations having at least two different movement patterns.

7. The method according to claim 6, wherein for each of the locations the respective scanning operations comprise a first scanning operation having a first movement pattern and a second scanning operation having a second movement pattern which is a rotated version of the first movement pattern.

8. The method according to claim 1, wherein the at least one irradiation device is at least one laser which is selected from the group consisting of CO₂ lasers, a diode lasers or fiber optic lasers.

9. The method according to claim 1, wherein two or more irradiation devices are utilized for the irradiation of each of the layers.

10. The method according to claim 1, wherein for each of the layers and for each of the locations different operating parameters of the at least one irradiation device are used during different ones of the time intervals associated with the respective location.

11. The method according to claim 1, wherein the operating parameters of the at least one irradiation device comprise one or more of laser power or particle beam power, intensity distribution profile, spacing between adjacent paths of a movement pattern of the respective laser beam or particle beam, speed of movement of the laser beam or particle beam and pulse duration of a pulsed laser beam or particle beam.

12. The method according to claim 1, wherein the polymer material is or comprises material selected from the group consisting of PA6, PA11, PA12, PARA, PPS, PBT, PAEK, including PEEK, PEK and PEKK, and/or wherein the material in powder form comprises the polymer material as matrix into which one or more of glass, carbon black, carbon fiber, graphene and aluminum is embedded.

13. An apparatus (1) for manufacturing a three-dimensional object by additive layer manufacturing, the apparatus comprising:
a housing (2) defining a chamber (3),
a support means (7) disposed inside the chamber,
a powder delivery means (9) adapted for providing the plurality of layers of material in powder form one on top of the other on the support means,
a temperature control means adapted for selectively controlling the temperature of each of the layers prior to irradiation thereof,
at least one irradiation device (12) adapted for irradiating each of the layers provided by the powder delivery means on the support means with a respective laser beam (13) or particle beam,
a beam movement means (14) adapted for selectively irradiating only portions of each of the layers provided by the powder delivery means on the support means,
a storage means (19) for storing a digital representation of a three-dimensional object in the form of a plurality of layers, and
a control unit (18) operatively coupled to the powder delivery means, the temperature control means, the irradiation device, the beam movement means and the storage means and configured to operate the powder delivery means, the temperature control means, the irradiation device and the beam movement means to manufacture a three-dimensional object in accordance with a digital representation of the object stored in the storage means and using the method of claim 1.

14. The apparatus according to claim 13, wherein the powder delivery means comprises a rotatable roller and a roller drive arrangement, wherein the roller drive arrangement is operable to simultaneously rotate the roller in a rotation direction and move it over the support means in a movement direction to distribute homogenously and in a defined thickness a layer of the material in powder form on the support means or a preceding layer, wherein the rotating direction and the movement direction are such that a portion of the surface of the roller facing the layer moves into a direction opposite the movement direction.

## Patentansprüche

1. Verfahren zur Herstellung eines dreidimensionalen Objekts durch generative Schichtfertigung, dass die folgenden Schritte umfasst:
sukzessives Bereitstellen von mehreren Schichten von Material in Pulverform, eine über der anderen, auf einem Trägermittel, wobei das Material in Pulverform ein Polymermaterial ist oder ein solches umfasst, und
Bestrahlen jeder Schicht, vor Bereitstellen der nachfolgenden Schicht, mit zumindest einem Laserstrahl oder Partikelstrahl unter Verwendung zumindest einer Bestrahlungsvorrichtung, wobei jede Schicht gezielt nur in denjenigen Teilen der Schicht bestrahlt wird, die dem hergestellten dreidimensionalen Objekt entsprechen, und wobei die Bestrahlung in einer Weise ausgeführt wird, dass das Material in den entsprechenden Teilen lokal geschmolzen wird,
wobei die Temperatur der Schichten so gesteuert wird, dass vor der Bestrahlung jeder Schicht die entsprechende Schicht eine Starttemperatur aufweist, die in einem Bereich von der Glasübergangstemperatur des Polymermaterials bis 30 % über der Glasübergangstemperatur ist, und
wobei für jede Schicht die Bestrahlung in einer Weise ausgeführt wird, dass jeder Ort dieser Teile der Schicht entsprechend dem hergestellten dreidimensionalen Objekt während mehrerer beabstandeter Zeitintervalle in Verbindung mit dem entsprechenden Ort mehrmals bestrahlt wird, wobei Betriebsparameter der zumindest einen Bestrahlungsvorrichtung so ausgewählt werden, dass in jedem der Orte das Polymermaterial erst während oder nach dem zweiten oder einem folgenden der Zeitintervalle in Verbindung mit dem entsprechenden Ort die Schmelztemperatur erreicht und dass in jedem der Orte die während jedes der zugehörigen Zeitintervalle durch den zumindest einen Laserstrahl oder Partikelstrahl eingeführte Energie unzureichend ist, um das Polymermaterial von der Starttemperatur auf die Schmelztemperatur des Polymermaterials zu erhitzen.

2. Verfahren nach Anspruch 1, wobei jeder der Orte mindestens dreimal bestrahlt wird und wobei die Betriebsparameter der zumindest einen Bestrahlungsvorrichtung so ausgewählt werden, dass in jedem der Orte das Polymermaterial während oder nach dem vorletzten oder einem früheren der Zeitintervalle in Verbindung mit dem entsprechenden Ort die Schmelztemperatur erreicht und vor dem Beginn des bzw. der letzten der Zeitintervalle in Verbindung mit dem entsprechenden Ort bereits geschmolzen ist.

3. Verfahren nach Anspruch 1, wobei für jede der Schichten die Bestrahlung ausgeführt wird durch Abtasten mittels des zumindest einen Laserstrahls oder Partikelstrahls dieser Teile der Schicht entsprechend dem hergestellten dreidimensionalen Objekt in einer Weise, dass für jeden der Orte und während jedes der zugehörigen Zeitintervalle sich ein Laserstrahl oder Partikelstrahl über den entsprechenden Ort in einer definierten Bewegungsrichtung bewegt, wobei für jeden der Orte mindestens zwei unterschiedliche Bewegungsrichtungen für unterschiedliche der zugehörigen Zeitintervalle verwendet werden.

4. Verfahren nach Anspruch 3, wobei für jeden der Orte unterschiedliche Bewegungsrichtungen für jeweils zwei aufeinander folgende der Zeitintervalle in Verbindung mit dem entsprechenden Ort verwendet werden.

5. Verfahren nach Anspruch 3, wobei für jeden der Orte die mindestens zwei unterschiedlichen Bewegungsrichtungen eine erste Bewegungsrichtung und eine zweite Bewegungsrichtung umfassen, die in einem Winkel von 0° bis 90° bezüglich der ersten Bewegungsrichtung ausgerichtet ist.

6. Verfahren nach Anspruch 3, wobei für jede der Schichten das Abtasten mittels des zumindest einen Laserstrahls oder Partikelstrahls mehrere separate Abtastoperationen umfasst, wobei während jeder von diesen ein Laserstrahl oder Partikelstrahl aus dem zumindest einen Laserstrahl oder Partikelstrahl in einem entsprechenden definierten Bewegungsmuster über alle Orte oder einer zusammenhängenden Teilmenge der Orte bewegt wird, sodass für jeden der Orte die Bestrahlungen während der entsprechenden Zeitintervalle während unterschiedlicher der Abtastoperationen ausgeführt werden, wobei für jeden der Orte die entsprechenden Abtastoperationen Abtastoperationen umfassen, die mindestens zwei unterschiedliche Bewegungsmuster aufweisen.

7. Verfahren nach Anspruch 6, wobei für jeden der Orte die entsprechenden Abtastoperationen eine erste Abtastoperation, die ein erstes Bewegungsmuster aufweist, und eine zweite Abtastoperation, die ein zweites Bewegungsmuster aufweist, das eine gedrehte Version des ersten Bewegungsmusters ist, umfassen.

8. Verfahren nach Anspruch 1, wobei die zumindest eine Bestrahlungsvorrichtung zumindest ein Laser ist, der aus der Gruppe ausgewählt wird, die aus CO₂-Lasern, Diodenlasern oder Glasfaserlasern besteht.

9. Verfahren nach Anspruch 1, wobei zwei oder mehr Bestrahlungsvorrichtungen für die Bestrahlung jeder der Schichten genutzt werden.

10. Verfahren nach Anspruch 1, wobei für jede der Schichten und für jeden der Orte unterschiedliche Betriebsparameter der zumindest einen Bestrahlungsvorrichtung während unterschiedlicher der Zeitintervalle in Verbindung mit dem entsprechenden Ort verwendet werden.

11. Verfahren nach Anspruch 1, wobei die Betriebsparameter der zumindest einen Bestrahlungsvorrichtung eines oder mehrere aus Laserleistung oder Partikelstrahlleistung, Intensitätsverteilungsprofil, Abstand zwischen angrenzenden Pfaden eines Bewegungsmusters des entsprechenden Laserstrahls oder Partikelstrahls, Bewegungsgeschwindigkeit des Laserstrahls oder Partikelstrahls und Impulsdauer eines gepulsten Laserstrahls oder Partikelstrahls umfassen.

12. Verfahren nach Anspruch 1, wobei das Polymermaterial ein Material ist oder umfasst, das aus der Gruppe ausgewählt wird, die besteht aus PA6, PAn, PA12, PARA, PPS, PBT, PAEK, umfassend PEEK, PEK und PEKK, und/oder wobei das Material in Pulverform das Polymermaterial als Matrix umfasst, in die eines oder mehrere aus Glas, Ruß, Kohlefaser, Graphen und Aluminium eingebettet sind.

13. Einrichtung (1) zur Herstellung eines dreidimensionalen Objekts durch generative Schichtenfertigung, wobei die Einrichtung Folgendes umfasst:
ein Gehäuse (2), das eine Kammer (3) definiert,
ein Trägermittel (7), das im Inneren der Kammer angeordnet ist,
ein Pulverbereitstellungsmittel (9), angepasst zum Bereitstellen von mehreren Schichten von Material in Pulverform übereinander auf dem Trägermittel,
ein Temperatursteuerungsmittel, angepasst zum gezielten Steuern der Temperatur jeder der Schichten vor der Bestrahlung derselben,
zumindest eine Bestrahlungsvorrichtung (12), angepasst zum Bestrahlen jeder der durch das Pulverbereitstellungsmittel auf dem Trägermittel bereitgestellten Schichten mit einem entsprechenden Laserstrahl (13) oder Partikelstrahl,
ein Strahlbewegungsmittel (14), angepasst zum gezielten Bestrahlen lediglich von Teilen jeder der durch das Pulverbereitstellungsmittel auf dem Trägermittel bereitgestellten Schichten,
ein Speichermittel (19) zum Speichern einer digitalen Darstellung eines dreidimensionalen Objekts in der Form von mehreren Schichten, und
eine Steuereinheit (18), wirkgekoppelt mit dem Pulverbereitstellungsmittel, dem Temperatursteuerungsmittel, der Bestrahlungsvorrichtung, dem Strahlbewegungsmittel und dem Speichermittel und ausgelegt zum Betreiben des Pulverbereitstellungsmittels, des Temperatursteuermittels, der Bestrahlungsvorrichtung und des Strahlbewegungsmittels zum Herstellen eines dreidimensionalen Objekts in Übereinstimmung mit einer digitalen Darstellung des Objekts, das im Speichermittel gespeichert ist, und unter Verwendung des Verfahrens nach Anspruch 1.

14. Einrichtung nach Anspruch 13, wobei das Pulverbereitstellungsmittel eine rotierbare Rolle und eine Rollenantriebsanordnung umfasst, wobei die Rollenantriebsanordnung dazu betreibbar ist, gleichzeitig die Rolle in einer Rotationsrichtung zu rotieren und sie in einer Bewegungsrichtung über das Trägermittel zu bewegen, um eine Schicht des Materials in Pulverform homogen und in einer definierten Dicke auf das Trägermittel oder eine vorhergehende Schicht zu verteilen, wobei die Rotationsrichtung und die Bewegungsrichtung so sind, dass ein Teil der Oberfläche der Rolle, der zur Schicht zeigt, sich in eine der Bewegungsrichtung entgegengesetzte Richtung bewegt.

## Revendications

1. Procédé de fabrication d'un objet tridimensionnel par fabrication additive, comprenant les étapes suivantes :
application successive d'une pluralité de couches de matériau sous forme de poudre, les unes au-dessus des autres, sur un moyen de support, le matériau sous forme de poudre étant ou comprenant un matériau polymère, et
irradiation de chaque couche, avant l'application de la couche suivante, avec au moins un faisceau laser ou faisceau de particules au moyen d'au moins un dispositif d'irradiation, chaque couche étant irradiée sélectivement uniquement dans les parties de la couche correspondant à l'objet tridimensionnel en train d'être fabriqué, et l'irradiation étant réalisée de telle sorte que le matériau est fondu localement dans les parties correspondantes,
dans lequel la température des couches est régulée de telle sorte que, avant l'irradiation de chaque couche, la couche respective possède une température de départ qui se situe dans une plage allant de la température de transition vitreuse du matériau polymère à 30 % au-dessus de la température de transition vitreuse, et
dans lequel, pour chaque couche, l'irradiation est réalisée de telle sorte que chaque emplacement des parties de la couche correspondant à l'objet tridimensionnel en train d'être fabriqué est irradié de multiples fois pendant de multiples intervalles de temps espacés associés à l'emplacement respectif, dans lequel les paramètres de fonctionnement de l'au moins un dispositif d'irradiation sont choisis de telle sorte qu'à chacun des emplacements, le matériau polymère atteint la température de fusion uniquement pendant ou après le deuxième des intervalles de temps associés à l'emplacement respectif ou un suivant, et qu'à chacun des emplacements, l'énergie introduite pendant chacun des intervalles de temps associés par l'au moins un faisceau laser ou faisceau de particules est insuffisante pour chauffer le matériau polymère de la température de départ à la température de fusion du matériau polymère.

2. Procédé selon la revendication 1, dans lequel chacun des emplacements est irradié au moins trois fois, et dans lequel les paramètres de fonctionnement de l'au moins un dispositif d'irradiation sont choisis de telle sorte qu'à chacun des emplacements, le matériau polymère atteint la température de fusion pendant ou après l'avant-dernier des intervalles de temps associés à l'emplacement respectif ou un précédent et est déjà fondu avant le début du ou des derniers des intervalles de temps associés à l'emplacement respectif.

3. Procédé selon la revendication 1 dans lequel, pour chacune des couches, l'irradiation est réalisée par balayage de l'au moins un faisceau laser ou faisceau de particules sur les parties de la couche correspondant à l'objet tridimensionnel en train d'être fabriqué de telle sorte que, pour chacun des emplacements et pendant chacun des intervalles de temps associés, un faisceau laser ou faisceau de particules parmi l'au moins un faisceau laser ou faisceau de particules se déplace sur l'emplacement respectif dans une direction de déplacement définie, dans lequel, pour chacun des emplacements, au moins deux directions de déplacement différentes sont utilisées pour différents intervalles parmi les intervalles de temps associés.

4. Procédé selon la revendication 3 dans lequel, pour chacun des emplacements, des directions de déplacement différentes sont utilisées pour chaque paire d'intervalles successifs parmi les intervalles de temps associés à l'emplacement respectif.

5. Procédé selon la revendication 3 dans lequel, pour chacun des emplacements, les au moins deux directions de déplacement différentes comprennent une première direction de déplacement et une deuxième direction de déplacement orientée à un angle allant de plus de 0° à 90° par rapport à la première direction de déplacement.

6. Procédé selon la revendication 3 dans lequel, pour chacune des couches, le balayage de l'au moins un faisceau laser ou faisceau de particules comprend une pluralité d'opérations de balayage séparées pendant chacune desquelles un faisceau laser ou faisceau de particules parmi l'au moins un faisceau laser ou faisceau de particules est déplacé selon un motif de déplacement défini respectif sur la totalité des emplacements ou un sous-ensemble contigu des emplacements, de telle sorte que, pour chacun des emplacements, les irradiations pendant les intervalles de temps respectifs sont réalisées pendant différentes opérations parmi les opérations de balayage, dans lequel, pour chacun des emplacements, les opérations de balayage respectives comprennent des opérations de balayage ayant au moins deux motifs de déplacement différents.

7. Procédé selon la revendication 6 dans lequel, pour chacun des emplacements, les opérations de balayage respectives comprennent une première opération de balayage ayant un premier motif de déplacement et une deuxième opération de balayage ayant un deuxième motif de déplacement qui est une version tournée du premier motif de déplacement.

8. Procédé selon la revendication 1, dans lequel l'au moins un dispositif d'irradiation est au moins un laser qui est choisi dans le groupe constitué par les lasers à CO₂, les diodes laser et les lasers à fibre optique.

9. Procédé selon la revendication 1, dans lequel au moins deux dispositifs d'irradiation sont utilisés pour l'irradiation de chacune des couches.

10. Procédé selon la revendication 1 dans lequel, pour chacune des couches et pour chacun des emplacements, des paramètres de fonctionnement différents de l'au moins un dispositif d'irradiation sont utilisés pendant différents intervalles parmi les intervalles de temps associés à l'emplacement respectif.

11. Procédé selon la revendication 1, dans lequel les paramètres de fonctionnement de l'au moins un dispositif d'irradiation en comprennent un ou plusieurs parmi la puissance laser ou puissance du faisceau de particules, le profil de distribution d'intensité, l'espacement entre trajectoires adjacentes d'un motif de déplacement du faisceau laser ou faisceau de particules respectif, la vitesse de déplacement du faisceau laser ou faisceau de particules et la durée d'impulsion d'un faisceau laser ou faisceau de particules pulsé.

12. Procédé selon la revendication 1, dans lequel le matériau polymère est ou comprend un matériau choisi dans le groupe constitué par le PA6, le PA11, le PA12, le PARA, le PPS, le PBT, les PAEK, y compris la PEEK, la PEK et la PEKK, et/ou dans lequel le matériau sous forme de poudre comprend le matériau polymère comme matrice dans laquelle un ou plusieurs matériaux parmi le verre, le noir de carbone, la fibre de carbone, le graphène et l'aluminium sont incorporés.

13. Appareil (1) destiné à fabriquer un objet tridimensionnel par fabrication additive, l'appareil comprenant :
un bâti (2) définissant une chambre (3),
un moyen de support (7) disposé à l'intérieur de la chambre,
un moyen de distribution de poudre (9) adapté pour appliquer la pluralité de couches de matériau sous forme de poudre les unes au-dessus des autres sur le moyen de support,
un moyen de régulation de température adapté pour réguler sélectivement la température de chacune des couches avant l'irradiation de celle-ci,
au moins un dispositif d'irradiation (12) adapté pour irradier chacune des couches appliquées par le moyen de distribution de poudre sur le moyen de support avec un faisceau laser (13) ou faisceau de particules respectif,
un moyen de déplacement de faisceau (14) adapté pour irradier sélectivement uniquement des parties de chacune des couches appliquées par le moyen de distribution de poudre sur le moyen de support,
un moyen de stockage (19) pour stocker une représentation numérique d'un objet tridimensionnel sous la forme d'une pluralité de couches, et
une unité de commande (18) fonctionnellement couplée au moyen de distribution de poudre, au moyen de régulation de température, au dispositif d'irradiation, au moyen de déplacement de faisceau et au moyen de stockage et configurée pour faire fonctionner le moyen de distribution de poudre, le moyen de régulation de température, le dispositif d'irradiation et le moyen de déplacement de faisceau pour fabriquer un objet tridimensionnel en fonction d'une représentation numérique de l'objet stockée dans le moyen de stockage et en utilisant le procédé de la revendication 1.

14. Appareil selon la revendication 13, dans lequel le moyen de distribution de poudre comprend un rouleau rotatif et un agencement d'entraînement de rouleau, dans lequel l'agencement d'entraînement de rouleau est utilisable pour faire tourner le rouleau dans une direction de rotation et simultanément le déplacer sur le moyen de support dans une direction de déplacement pour répartir de façon homogène et dans une épaisseur définie une couche du matériau sous forme de poudre sur le moyen de support ou une couche précédente, dans lequel la direction de rotation et la direction de déplacement sont telles qu'une partie de la surface du rouleau faisant face à la couche se déplace dans une direction opposée à la direction de déplacement.
